# EUROPÄISCHE PATENTSCHRIFT

(11) **EP 3 837 779 B1**
(45) Veröffentlichungstag und Bekanntmachung des Hinweises auf die Patenterteilung: **25.10.2023**
(21) Anmeldenummer: 20700484.7
(22) Anmeldetag: 10.01.2020
(51) Int. Cl.: H04B 10/40, H04B 10/118, H04B 10/67

(54) **AUFBAU ZUM EMPFANGEN EINES OPTISCHEN DATENSIGNALS**
STRUCTURE FOR RECEIVING AN OPTICAL DATA SIGNAL
STRUCTURE DE RÉCEPTION D'UN SIGNAL DE DONNÉES OPTIQUE

(30) Priorität: 10.01.2019 DE 102019200225
(43) Veröffentlichungstag der Anmeldung: 23.06.2021
(73) Patentinhaber: Deutsches Zentrum für Luft- und Raumfahrt e.V., 51147 Köln (DE)
(72) Erfinder: REIN, Fabian, 82140 Olching (DE); POLIAK, Juraj, 81247 München (DE); MATA CALVO, Ramon, 81543 München (DE)
(74) Vertreter: dompatent von Kreisler Selting Werner - Partnerschaft von Patent- und Rechtsanwälten mbB
(86) Internationale Anmeldenummer: PCT/EP2020/050526
(87) Internationale Veröffentlichungsnummer: WO 2020/144319

(56) Entgegenhaltungen:
- EP-A2- 1 130 810
- CN-B- 103 311 790
- US-A1- 2006 024 061

## Beschreibung

Die vorliegende Erfindung betrifft einen Aufbau zum Empfangen eines optischen Freistrahl Datensignals. Weiterhin betrifft die vorliegende Erfindung ein Datenübertragungssystem zur Übertragung eines optischen Freistrahl Datensignals von einem Sender zu einem Empfänger. Ebenso betrifft die vorliegende Erfindung ein Verfahren zur Justage eines solchen Aufbaus bzw. Datenübertragungssystems.

Bei der Übertragung von optischen Datensignalen durch die Atmosphäre kommt es zu Signalstörungen durch die Brechungsindexturbulenz der Atmosphäre. In der optischen Freistrahl-Kommunikation will man in eine Singlemode-Faser einkoppeln um faserbasierte Telekommunikationskomponenten verwenden zu können. Aufgrund der Phasenstörungen des Kanals kommt es zu starken Verlusten im Downlink vom Satelliten oder Flugzeugen, wenn das Signal in die Singlemode Faser eingekoppelt wird. Ist die Empfangsapertur sehr klein, ist die Phasenstörung von niedriger Ordnung (bei denen nur die Zernike Moden 1,2 und 3 dominant sind) und man erhält Winkelfehler auf der fokalen Ebene (den sogenannten x, y-Tilt). Wenn die Teleskopapertur größer als die Phasenstörungsgröße ist, erhält man zudem Phasenstörungen höherer Ordnung (höhere Zernike Moden sind hier nicht vernachlässigbar). Es bilden sich mehrere Intensitätsflecken auf der fokalen Ebene, die ihre Lage und Größe mit einer Millisekunde Skala ändern.

Im Uplink treten die Phasenstörungen nahe am Sender auf, da der Strahl nur in den ersten Kilometern durch Atmosphäre propagiert. Anschließend weitet sich der Strahl nahezu unbeeinflusst im All entsprechend der Divergenz auf. Dies resultiert darin, dass die Empfangsapertur im Vergleich zur Phasenstörgröße immer sehr klein ist. So äußert sich die Störung am Empfänger hauptsächlich entsprechend einer Phasenstörung niedriger Ordnung als Winkelfehler und Intensitätsschwankung.

In beiden Situationen ist es nötig, die Winkelstörungen, also die Phasenstörung niedriger Ordnung, so zu korrigieren, dass das empfangene Licht bestmöglich in die optische Empfangsfaser eingekoppelt wird. Da die einkoppelte Leistung in der optischen Faser keinen Rückschluss auf einen Winkelfehler zulässt (nicht genügend Freiheitsgrade), ist ein externer Trackingsensor notwendig. Dieser befindet sich normalerweise in einem parallel abgezweigten optischen Pfad und muss exakt an der optischen Faser ausgerichtet sein. Der Tracking Sensor ist dabei ein Photosensitiver Sensor welcher hinter einer Fokussierlinse (Sensor-Fokuslinse) angebracht ist. Ein Eingangswinkelfehler wird also auf dem Sensor als lateraler Versatz gemessen. Durch den Abstand zwischen Sensor-Fokuslinse und Sensor lässt sich der Eingangswinkel berechnen. Um eine effiziente Fasereinkopplung zu erhalten, ist außerdem der richtige Abstand zwischen optischer Faser und Fokuslinse (im folgenden Empfangs-Kollimationsoptik genannt) entscheidend.

In der optischen Satellitenkommunikation benötigt man in jedem Teilnehmer sowohl ein Empfangssystem, als auch ein Sendesystem. Zum einen ist so bidirektionale Kommunikation möglich. Zum anderen benötigt man immer eine Positionsreferenz (einen sogenannten Beacon), damit auch bei sehr kleinen Sendestrahlkeulen eine genaue Ausrichtung der Kommunikationspartner (engl. pointing) erzielt wird. Da es sich in der Satellitenkommunikation immer um zwei sich bewegende Kommunikationspartner handelt und die Abstände sehr groß sind, muss diese Positionsreferenz / der Sendestrahl immer mit einem Vorhaltewinkel (engl. point-ahead angle) abgestrahlt werden um den Kommunikationspartner zu treffen. Um einen definierten Vorhaltewinkel einstellen zu können, muss jedoch dieses Sendesystem während der Justage an dem Empfangssystem ausgerichtet werden.

Die Einstellung von allen Elementen zur Fasereinkopplung ist kritisch, um eine optimale Einkopplungseffizienz zu bekommen.

Optische Kommunikation von Satelliten und Flugzeugen benötigen adaptive Optik und eine Singlemode Faser-Einkopplung, wenn man den Datendurchsatz bei der Datenübertragung erhöhen will. Das ermöglicht optische Vorverstärkung und die Verwendung der DWDM-Technologie.

US 2006/024061 beschreibt ein adaptives optisches Freiraum-Laserkommunikationssystem mit Signalsende- und -empfangskanälen an allen Endgeräten im Kommunikationssystem, wobei Wellenfronterfassungs- (WFS) und Wellenfrontkorrekturmechanismen entlang der Signalsende- und -empfangskanäle aller Endgeräte im Kommunikationssystem (d. h. adaptive Optiken) eingesetzt werden, um den Zustand des Laserstrahls am Empfänger zu verbessern (d. h. die Größe des Flecks in der Detektorebene zu reduzieren).

EP 1130810 beschreibt ein Empfangssystem zum Erfassen, Verfolgen und Empfangen eines empfangenen Signals.

Aufgabe der vorliegenden Erfindung ist es einen Aufbau zum Empfangen eines optischen Datensignals zu schaffen, welcher zuverlässig zu justieren ist für einen optimalen Empfang des optischen Datensignals. Weiterhin ist es Aufgabe der vorliegenden Erfindung ein Datenübertragungssystem entsprechend eines solchen Aufbaus zu schaffen sowie ein Verfahren zur Justage eines solchen Aufbaus.

Die Aufgabe wird gelöst durch einen Aufbau nach Anspruch 1, sowie einem Datenübertragungssystem gemäß Anspruch 10 und einem Verfahren zur Justage des Aufbaus entsprechend Anspruch 12.

Der erfindungsgemäße Aufbau zum Empfangen eines optischen Datensignals weist eine Eingangsoptik auf zum Empfangen des optischen Datensignals. Weiterhin weist der Aufbau eine optische Empfangsfaser auf mit einer Endfacette, wobei mittels einer Empfangs-Kollimationsoptik das optische Datensignal in die optische Empfangsfaser einkoppelbar ist. Mit der optischen Empfangsfaser ist ein Detektor verbunden zur Detektion des optischen Datensignals und Umwandlung in ein elektrisches Signal. Aufgrund der Verwendung eines fasergebundenen Detektors können Standardtelekommunikationssysteme verwendet werden zur Detektion des optischen Datensignals. Weiterhin ist erfindungsgemäß eine Empfangskalibrationsquelle vorgesehen. Dabei ist die Empfangskalibrationsquelle insbesondere ebenfalls fasergebunden und mittels eines Zirkulators mit der optischen Empfangsfaser verbunden. Licht der Empfangskalibrationsquelle verlässt die Empfangsfaser an deren Endfacette und wird durch die Empfangs-Kollimationsoptik kollimiert. Weiterhin ist erfindungsgemäß ein in den Strahlengang klappbarer Retroreflektor vorgesehen, welcher zur Justage des Aufbaus in den Strahlengang geklappt wird, so dass das Licht der Empfangskalibrationsquelle zurückreflektiert wird und mittels der Empfangs-Kollimationsoptik auf die Endfacette der Empfangsfaser fokussiert wird. Retroreflektoren haben dabei die Eigenschaft einkommendes Licht kollinear zurückzureflektieren.

Erfindungsgemäß ist der Abstand in z-Richtung zwischen Empfangs-Kollimationsoptik und Endfacette der Empfangsfaser veränderbar. Ist der Abstand zwischen Empfangs-Kollimationsoptik und Endfacette der Empfangsfaser zu groß oder zu klein, wird einkommendes Licht des optischen Datensignals, welches kollimiert durch die Eingangsoptik tritt, nicht optimal auf die Endfacette der Empfangsfaser fokussiert, wodurch Einkoppelverluste beim Einkoppeln des optischen Datensignals in die optische Empfangsfaser auftreten. Somit ist es erforderlich den Abstand in z-Richtung, also den Abstand entlang der optischen Achse, optimal einzustellen. Hierzu wird das Licht der Empfangskalibrationsquelle verwendet. Das Licht der Empfangskalibrationsquelle tritt aus der Endfacette der Empfangsfaser aus und wird durch die Empfangs-Kollimationsoptik kollimiert. Ist jedoch der Abstand in z-Richtung zwischen Empfangs-Kollimationsoptik und Endfacette der Empfangsfaser nicht optimal, ist das Licht der Empfangskalibrationsquelle nach der Empfangs-Kollimationsoptik nicht vollständig kollimiert und somit leicht divergent oder konvergent. Die Divergenz bzw. Konvergenz bleibt bei der Rückreflektion durch den Retroreflektor erhalten, so dass leicht divergentes oder konvergentes Licht wiederum auf die Empfangs-Kollimationsoptik trifft. Ein divergenter oder konvergenter Lichtstrahl führt jedoch zu einer Verschiebung des Fokuspunktes, so dass bei einem nicht optimalen Abstand zwischen Empfangs-Kollimationsoptik und Endfacette der Empfangsfaser das Licht der Empfangskalibrationsquelle hinter oder vor der Endfacette der Empfangsfaser in z-Richtung seinen Fokuspunkt hat. Hierdurch wird jedoch das Licht der Empfangskalibrationsquelle nur ungenügend in die Empfangsfaser eingekoppelt. Vom Detektor wird somit eine geringe Leistung detektiert. Insbesondere liegen dabei die Endfacette der Empfangsfaser und die Empfangs-Kollimationsoptik auf einer gemeinsamen optischen Achse, die bevorzugt im Wesentlichen festgelegt ist und sich nicht verändert. Durch Anpassen des Abstands zwischen Empfangs-Kollimationsoptik und Endfacette der Empfangsfaser kann sichergestellt werden, dass das Licht der Empfangskalibrationsquelle nach der Empfangs-Kollimationsoptik vollständig kollimiert ist. Dieses kollimierte Licht wird sodann vom Retroreflektor zurückreflektiert, durch die Empfangs-Kollimationsoptik wieder fokussiert, wobei der Fokuspunkt genau auf der Endfacette der Empfangsfaser liegt. Hierdurch wird die empfangene Leistung des Detektors maximiert. Somit kann auf einfache Weise der optimale Abstand in z-Richtung zwischen der Empfangs-Kollimationsoptik und der Endfacette der Faser gefunden werden. Für den Betrieb des Aufbaus zum Empfang eines optischen Datensignals wird sodann der Retroreflektor aus dem Strahlengang herausgeklappt. Ein einkommendes optisches Datensignal, welches durch die Eingangsoptik in den Aufbau gelangt, weist insbesondere aufgrund des großen Abstands zwischen Sender und Empfänger bei der Verwendung als Satelliten-Uplink im Wesentlichen kollimiertes Licht auf, so dass dieses optimal auf die Endfacette der Empfangsfaser fokussiert wird, wodurch eine effektive Einkopplung des empfangenen optischen Datensignals in die Empfangsfaser und somit in den Detektor ermöglicht wird. Der mittels der Empfangskalibrationsquelle gefundene optimale Abstand gilt somit auch für den Betrieb des Aufbaus für das einkommende optische Datensignal. Hierdurch kann eine einfach, zuverlässige und schnelle Justage erfolgen.

Vorzugsweise ist ein Vier-Quadranten-Sensor (4QD) vorgesehen, wobei bei der Justage des Aufbaus, wenn der Retroreflektor in den Strahlengang geklappt ist, Licht der Empfangskalibrationsquelle mittels einer Optik auf den Vier-Quadranten-Sensor fokussiert wird. Somit hängt die Position auf dem Vier-Quadranten-Sensor ab von der lateralen Position der Endfacette der Empfangsfaser. Der Vier-Quadranten-Sensor ist dabei in einer lateralen Ebene, also senkrecht zur optischen Achse, bewegbar, was einer relativen lateralen Bewegung zwischen Vier-Quadranten-Sensor und Endfacette der Empfangsfaser entspricht. Licht der Empfangskalibrationsquelle tritt aus der Endfacette der Empfangsfaser aus und wird durch die Empfangs-Kollimationsoptik kollimiert und sodann vom Retroreflektor zurückreflektiert. Ein Teil des zurückreflektierten Lichts der Empfangskalibrationsquelle wird sodann mittels der Optik auf den Vier-Quadranten-Sensor fokussiert. Ein Verschieben des Vier-Quadranten_Sensors führt zu einem Verschieben des Fokuspunkts relativ zur Sensormitte des Vier-Quadranten Sensors. Nur bei optimaler Position des Vier-Quadranten_Sensors relativ zur Endfacette der Faser führt dies zu einer mittigen Position des Lichts der Empfangskalibrationsquelle auf dem Vier-Quadranten-Sensor. Somit ist auf einfache Weise auch die relative Position der Endfacette gegenüber dem Vier-Quadranten-Sensor in x- und y-Richtung - senkrecht zur optischen Achse - justierbar um eine optimale Einkopplung des optischen Datensignals in die Empfangsfaser während des Betriebs des Aufbaus zu gewährleisten. Die x/y-Position der Endfacette der Faser wird dabei insbesondere nicht verändert und verbleibt zentral auf der optischen Achse der Empfangs-Kollimationsoptik, was den Einfluss optischer Ungenauigkeiten der Empfangs-Kollimationsoptik reduziert.

Vorzugsweise ist ein kippbarer Spiegel bzw. schnell bewegbarer Spiegel (fast steering mirror - FSM oder tip/tilt mirror) zum Ausgleich eines Winkelfehlers des empfangenen optischen Datensignals vorgesehen. Dabei wird das Signal des Vier-Quadranten-Sensors herangezogen um mittels einer Regelschleife die Bewegung des kippbaren Spiegels zu steuern. Somit liefert der Vier-Quadranten-Sensor durch die Justage ein Signal, welches es ermöglicht das optische Eingangssignal optimal auf die Position der Endfacette der Empfangsfaser zu regeln.

Vorzugsweise ist ein Positionssensor - beispielsweise ein sogenannter PSD (Position Sensitive Device) - vorgesehen, wobei bei der Justage, wenn der Retroreflektor in den Strahlengang geklappt ist, Licht der Empfangskalibrationsquelle mittels einer Optik auf diesen Positionssensor fokussiert wird zur Ermittlung der lateralen Position der Endfacette der Empfangsfaser relativ zum Positionssensor. Dieser Positionssensor kann im System statisch verbaut sein und seine Position kann nicht verändert werden. Die während der Justage gemessene Positionsinformation des Sensors dient als Referenz für die Grobausrichtung während des Betriebs. Hierbei kann der Positionssensor eine größere Fläche aufweisen, bei gleichzeitig geringerer Positionsauflösung als der Vier-Quadranten-Sensor. Insbesondere kann der Positionssensor hierdurch die Nachteile des sehr nichtlinearen Ansprechverhaltens des Vier-Quadranten-Sensors ausgleichen. Mit Hilfe dieses Positionssensors ist man somit in der Lage, eine Grobausrichtung des Aufbaus zu seinem Kommunikationspartner bzw. einem Sender vorzunehmen.

Vorzugsweise ist ein Sendelaser vorgesehen, so dass der Aufbau ausgebildet ist zum bidirektionalen Senden und Empfangen eines optischen Datensignals. Dabei ist der Sendelaser insbesondere mit einer optischen Sendefaser verbunden. Durch Verwendung eines fasergebundenen Sendelasers können Standardtelekommunikationslaser verwendet werden.

Vorzugsweise ist eine Sendekalibrationsquelle vorgesehen. Bei der Sendekalibrationsquelle kann es sich entweder um den Sendelaser selbst handeln, welcher derart regelbar ist, dass die Leistung des Sendelasers im Wesentlichen der Leistung der Empfangskalibrationsquelle entspricht. Hierdurch wird sichergestellt, dass das Licht von dem Sendelaser als Sendekalibrationsquelle, welches von dem Vier-Quadranten-Sensor oder dem Detektor empfangen wird, diese nicht übersättigt. Alternativ hierzu kann eine zusätzliche Sendekalibrationsquelle mit einer entsprechenden Leistung vorgesehen sein, welche beispielsweise über einen optischen Hochleistungsschalter (high power switch - HPS) mit dem Sendelaser kombiniert wird, wobei die Komponenten des Hochleistungsschalters und der Sendekalibrationsquelle mit der Sendefaser verbunden sind. Das Licht der Sendekalibrationsquelle wird bei der Justage, wenn der Retroreflektor in den Strahlengang geklappt ist, ebenfalls am Retroreflektor reflektiert. Das vom Retroreflektor zurückreflektierte Licht der Sendekalibrationsquelle wird über die Empfangs-Kollimationsoptik in die Empfangsfaser eingekoppelt und sodann vom Detektor detektiert. Dabei ist der Abstand zwischen einer Endfacette der Sendefaser und einer Sende-Kollimationsoptik zum Auskoppeln des optischen Datensignals des Sendelasers aus der Sendefaser in z-Richtung veränderbar. Dabei wird der Abstand zwischen der Endfacette der Sendefaser und der entsprechenden Sende-Kollimationsoptik angepasst in Abhängigkeit von der vom Detektor erfassten Leistung. Insbesondere liegen dabei die Endfacette der Sendefaser und die Sende-Kollimationsoptik auf einer gemeinsamen optischen Achse, die bevorzugt im Wesentlichen festgelegt ist und sich nicht verändert. Ist der Abstand zwischen der Endfacette der Sendefaser und der entsprechenden Sende-Kollimationsoptik nicht optimal, wird das Licht der Sendekalibrationsquelle nach der Sende-Kollimationsoptik nicht vollständig kollimiert, sondern weist eine leichte Divergenz oder Konvergenz auf. Dies leicht divergierende oder konvergierende Licht der Sendekalibrationsquelle wird vom Retroreflektor zurückreflektiert und sodann von der Empfangs-Kollimationsoptik auf die Empfangsfaser fokussiert. Aufgrund der vorliegenden Divergenz oder Konvergenz liegt hierbei der Fokuspunkt des Lichtes der Sendekalibrationsquelle in z-Richtung vor oder hinter der zuvor Justierten Endfacette der Empfangsfaser. Somit erfolgt ein nicht optimales Einkoppeln des Lichts der Sendekalibrationsquelle in die Empfangsfaser, wodurch eine geringere Leistung durch den Detektor detektiert wird. Bei einem optimalen Abstand zwischen der Endfacette der Sendefaser und der entsprechenden Sende-Kollimationsoptik wird das Licht der Sendekalibrationsquelle optimal kollimiert, wodurch ebenso eine optimale Einkopplung in die Empfangsfaser gewährleistet ist. Hierdurch wird die durch den Detektor empfangene Leistung des Lichts der Sendekalibrationsquelle maximiert. Somit wird der Abstand zwischen Sendefaser und entsprechender Sende-Kollimationsoptik anhand der mittels dem Detektor empfangenen Leistung des Lichts der Sendekalibrationsquelle justiert.

Vorzugsweise ist im Strahlengang des Sendelasers ein Vorhaltespiegel (Point-Ahead Angle Mirror - PAAM oder Point-Ahead Spiegel) vorgesehen. Hierdurch ist es möglich aufgrund der Laufzeit des optischen Datensignals vom Sender zum Empfänger über große Distanzen und der dadurch erfolgten Weiterbewegung des Senders relativ zum Empfänger durch einen Vorhaltewinkel auszugleichen, so dass gleichzeitig empfangen und gesendet werden kann. Hierzu ist der Point-Ahead Spiegel insbesondere ausschließlich im Strahlengang des Sendelasers, also im Sendepfad vorhanden, so dass eine unabhängige Steuerung des Strahlengangs des empfangenen optischen Datensignals und dem Strahlengang des gesendeten optischen Datensignals möglich ist.

Vorzugsweise ist im Strahlengang des Sendelasers ein Vorhaltespiegel (Point-Ahead Angle Mirror - PAAM oder Point-Ahead Spiegel) vorgesehen. Dieser Point-Ahead Spiegel kann den Winkel des Sendestrahls und somit den relativen Winkel zwischen Sendestrahl und Empfangsstrahl insbesondere in 2 Achsen verändern. Licht der Sendekalibrationsquelle, welches von dem Retroreflektor zurückreflektiert wird, gelangt ebenfalls auf den Vier-Quadranten-Sensor. Dabei ist die gemessene Position auf dem Vier-Quadranten-Sensor abhängig vom lateralen relativen Offset zwischen Endfacette der Sendefaser und Sensormitte des Vier-Quadranten-Sensors. Somit kann durch eine Auslenkung des Point Ahead Spiegels der Winkelfehler zwischen Sende- und Empfangspfad nach vorheriger Justage des Empfangspfads vollständig ausglichen werden. Im Betrieb kann dann ein zusätzlicher Vorhaltewinkel zur justagebedingten Auslenkung des Point-Ahead-Spiegels hinzugefügt werden. Der Point-Ahead-Spiegel kann somit genutz werden um einen Winkelfehler zwischen Sendepfad und Empfangspfad auszugeichen und gleichzeitig um im Betrieb einen Vorhaltewinkel zu gewährleisten zur Berücksichtigung der Laufzeit des optischen Datensignals vom Sender zum Empfänger.

Insbesondere kann für die Justage des Sendepfads das Licht der Empfangskalibrationsquelle ausgeschaltet werden, so dass keine Beeinflussung der Messung des Vier-Quadranten-Sensor erfolgt.

Vorzugsweise handelt es sich bei der Eingangsoptik um ein Teleskop.

Vorzugsweise ist im Strahlengang eine adaptive Optik, insbesondere ausgebildet als verformbarer Spiegel (Deformable Mirror - DM), vorgesehen zur Adaption der Wellenfront-Störungen bei der Übertragung.

Vorzugsweise ist ein Wellenfront-Sensor vorgesehen, welcher insbesondere verbunden ist mit der adaptiven Optik, so dass die vom Wellenfront-Sensor detektierte Wellenfront-Störung durch die adaptive Optik ausgeglichen werden kann.

Weiterhin ist eine Phasenkalibrationsquelle vorgesehen, welche insbesondere durch einen Kipp-Spiegel in den Strahlengang eingekoppelt wird. Das Licht der Phasenkalibrationsquelle wird sodann vom Wellenfront-Sensor empfangen wodurch die Influenz Matrix bestimmt werden kann, welche insbesondere sodann für die Steuerung der adaptiven Optik verwendet wird. Dies ist möglich, da das Licht der Phasenkalibrationsquelle zunächst keine Phasenstörung aufweist und somit am Wellenfront-Sensor der Einfluss des Aufbaus auf die Phasenstörung bestimmt werden kann.

Vorzugsweise handelt es sich bei der Empfangskalibrationsquelle, der Sendekalibrationsquelle und der Phasenkalibrationsquelle um Laser, wobei insbesondere Empfangskalibrationsquelle und Sendekalibrationsquelle und besonders bevorzugt auch die Phasenkalibrationsquelle unterschiedliche Wellenlängen aufweisen.

Weiterhin betrifft die Erfindung ein Datenübertragungssystem zur Übertragung eines optischen Datensignals von einem Sender zu einem Empfänger, wobei Sender und / oder Empfänger ausgebildet sind gemäß dem Aufbau wie vorstehend beschrieben.

Vorzugsweise handelt es sich bei dem Datenübertragungssystem um einen Satelliten-Uplink, wobei es sich bei dem Empfänger insbesondere um einen Satelliten, beispielsweise in einer geostationären Umlaufbahn, handelt und bei dem Sender um einen erdnahen oder bodenstationären Sender. Selbstverständlich können die Positionen von Empfänger und Sender auch vertauscht sein.

Bevorzugt ist jedoch, dass Sender und Empfänger als bidirektionale Sender und Empfänger ausgebildet sind.

Weiterhin betrifft die vorliegende Erfindung ein Verfahren zur Justage eines Aufbaus zum Empfangen und / oder Senden eines optischen Datensignals mit einem Aufbau wie vorstehend beschrieben. Für die Justage des Empfangspfades des Aufbaus wird zunächst der Retroreflektor in den Strahlengang geklappt. Sodann wird Licht der Empfangskalibrationsquelle ausgesendet und vom Retroreflektor auf den Detektor zurückreflektiert. Dabei wird der Abstand der Endfacette der Faser zur Empfangs-Kollimationsoptik angepasst bis die vom Detektor ermittelte Leistung des empfangenen Lichts der Empfangskalibrationsquelle maximal wird. Somit ist der optimale Abstand der Endfacette der Empfangsfaser zur Empfangs-Kollimationsoptik gefunden.

Vorzugsweise erfolgt sodann ein Verschieben des Vier-Quadranten-Sensors in einer Ebene senkrecht zur optischen Achse bis der vom Retroreflektor auf den Vier-Quadranten-Sensor zurückreflektierte Anteil mittig auf dem Vier-Quadranten-Sensor liegt. Hierdurch wird eine optimale Ausrichtung des Vier-Quadranten-Sensors relativ zur Endfacette der Empfangsfaser erzielt. Abschließend wird der Retroreflektor aus dem Strahlengang zurückgeklappt und ein optisches Datensignal wird mit dem fasergebundenen Detektor empfangen. Somit ist auf einfache Weise mittels dem vorgesehenen klappbaren Retroreflektor und dem Vier-Quadranten-Sensor eine zuverlässige Justage des Aufbaus zum Empfangen eines optischen Datensignals möglich.

Vorzugsweise wird vor der Anpassung der Position der Endfacette der Empfangsfaser in der lateralen Ebene mittels des Vier-Quadranten-Sensors ein weiterer Positionssensor zur Ermittlung der Position des vom Retroreflektor reflektierten Lichts verwendet. Hierbei wird mittels des Positionssensors zunächst während der Justage die Position gemessen. Diese dient während des Betriebs als Referenz für eine Grobausrichtung.

Vorzugsweise wird für die Sendestrahljustage Licht von der Sendekalibrationsquelle ausgesendet und vom Retroreflektor auf den Detektor zurückreflektiert. Dabei wird der Abstand zwischen der Endfacette der Sendefaser und der Kollimationsoptik in Abhängigkeit von der vom Detektor ermittelten Leistung des empfangenen Lichts der Sendekalibrationsquelle angepasst. Somit lässt sich die Position entlang der optischen Achse der Sendefaser relativ zur entsprechenden Sende-Kollimationsoptik mittels dem Detektor ebenfalls justieren. Das Vorsehen eines weiteren Detektors ist nicht erforderlich. Der Detektor erfüllt somit eine Doppelfunktion und dient erstens zur Justierung der Empfangsfaser und zweitens zur Justierung der Sendefaser.

Vorzugsweise wird mittels einem Vorhaltespiegel der Winkelversatz zwischen den optischen Pfaden des empfangenen optischen Datensignals und dem gesendeten optischen Datensignals eliminiert durch Überlapp der vom Retroreflektor (56) zurückreflektierten Signale auf einem Vier-Quadranten-Sensor. Der Winkel des Vorhaltespiegels wird somit derart verändert, dass dieser ebenfalls auf den Mittelpunk des Vier-Quadranten-Sensors trifft. Wurde zuvor die laterale Position des Vier-Quadranten-Sensors an die laterale Position der Endfacette der Empfangsfaser angepasst, so wird durch den Winkel des Vorhaltespiegels sichergestellt, dass kein Winkelversatz vorliegt.

Vorzugsweise ist das Verfahren anhand der Merkmale des Aufbaus wie vorstehend beschrieben weitergebildet.

Nachfolgend wird die Erfindung anhand bevorzugter Ausführungsformen unter Bezugnahme auf die beigefügten Zeichnungen näher erläutert.

Es zeigen:
- Fig. 1: ein erfindungsgemäßes Datenübertragungssystem und
- Fig. 2: Detaildarstellung des erfindungsgemäßen Aufbaus zum Senden und Empfangen eines optischen Datensignals.

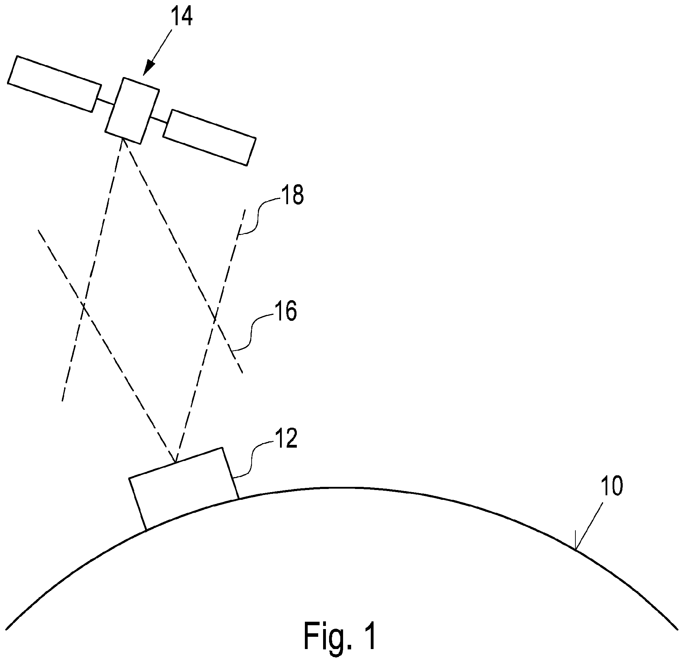

Fig. 1 zeigt die Verwendung des erfindungsgemäßen Aufbaus als Satelliten-Uplink. Hierzu ist auf der Erdoberfläche 10 ein Sender 12 angeordnet sowie als Satellit 14 ein Empfänger dargestellt. Sender und Empfänger sind dabei insbesondere als bidirektionale Sender und Empfänger ausgebildet, so dass gleichzeitig das Senden und Empfangen von Daten zwischen dem Sender 12 und dem Satelliten 14 erfolgen kann. Ebenso ist dargestellt das vom Sender 12 ausgesendete optische Datensignal 18, welches über die Entfernung zwischen dem Sender 12 und dem Empfänger 14 divergent ausgebildet ist. Dabei ist die Apertur des Aufbaus klein gegenüber der Divergenz, so dass im Wesentlichen kollimiertes Licht am Satelliten empfangen wird. Ebenso kann auch der Satellit 14 ein optisches Datensignal 16 zum Sender 12 senden, welches ebenfalls divergiert.

Der erfindungsgemäße Aufbau 20 weist eine Eingangsoptik 22 auf, ausgebildet als Teleskop. Dabei weist das Teleskop eine Apertur 24 auf, welche, wie vorstehend bereits beschrieben, klein ist gegenüber der Strahlbreite, so dass im Wesentlichen kollimiertes Licht empfangen wird. Das empfangene optische Datensignal wird über einen schnellen in zwei Achsen beweglichen Spiegel 26 umgelenkt. Diese Spiegel sind auch bekannt als fast steering mirrors (FSM) oder tip/tilt mirrors. Hierbei wird durch die kippbaren Spiegel 26 ein Winkelfehler des empfangenen optischen Datensignals ausgeglichen. Sodann wird das empfangene optische Datensignal über einen verformbaren Spiegel 28 (deformable mirror - DM) als adaptive Optik umgelenkt.

Das empfangene optische Datensignal wird mit einem Strahlteiler 30 zumindest teilweise auf einen Detektor 32 gelenkt. Dabei ist der Detektor 32 fasergebunden. Zur Einkopplung des empfangenen optischen Datensignals in eine Empfangsfaser 34 ist eine Empfangs-Kollimationsoptik 36 vorgesehen, welche das kollimierte optische Datensignal auf eine Endfacette der Empfangsfaser 34 fokussiert und dieses hierdurch in die Empfangsfaser 34 einkoppelt, wodurch das optische Datensignal zum Detektor 32 gelangt.

Der nicht auf den Detektor 32 gelenkte Teil des empfangenen optischen Datensignals wird auf einen Vier-Quadraten-Detektor 38 mittels einer Fokussierlinse 40 fokussiert. Der Vier-Quadranten-Sensor 38 dient hierbei im Betrieb als Tracking Sensor um eine relative Positionsänderung zwischen Sender 12 und Empfänger 14 zu detektieren. Dabei ist insbesondere der Vier-Quadranten-Sensor 38 über ein negatives Rückkoppelsignal mit dem kippbaren Spiegel 26 verbunden, so dass der kippbare Spiegel 26 durch die Messung des Vier-Quadranten-Sensors 38 geregelt wird. Eine relative Positionsänderung zueinander von Sender 12 und Empfänger 14 kann somit durch den kippbaren Spiegel 26 ausgeglichen werden.

Zwischen dem Vier-Quadranten-Sensor 38 und dem Strahlteiler 30 ist ein weiterer Strahlteiler 42 angeordnet, wodurch ein Teil des empfangenen optischen Datensignals auf einen Wellenfront-Sensor 44 geführt wird. Durch den Wellenfront-Sensor 44 lassen sich Phasenstörungen des empfangenen Datensignals, beispielsweise aufgrund der Atmosphäre, erfassen. Insbesondere ist der Wellenfront-Sensor ausgebildet als Shack-Hartmann Sensor. Der Wellenfront-Sensor 44 ist dabei vorzugsweise mit dem verformbaren Spiegel 28 verbunden (nicht dargestellt), wobei durch den verformbaren Spiegel 28 Fehler in der Wellenfront ausgeglichen werden können.

Weiterhin ist ein Sendelaser 46 vorgesehen, welcher ebenfalls fasergebunden ist mit einer Sendefaser 48. Das aus der Sendefaser 48 austretende Licht des Sendelasers 46 wird mittels einer Sende-Kollimationsoptik 50 kollimiert. Das so kollimierte optische Datensignal wird über einen Point-Ahead Spiegel bzw. Vorhaltespiegel 52 umgelenkt und mittels eines weiteren Strahlteilers 54 mit dem Strahlengang des empfangenen optischen Datensignals überlagert. Dabei kann die Überlagerung insbesondere wellenlängenabhängig und/oder polarisationsabhängig erfolgen Der Punkt-voraus Spiegel ist dabei ausgebildet um einen Positionsversatz aufgrund der Laufzeit des optischen Datensignals auszugleichen. Hierdurch ist es möglich empfangenes optisches Datensignal und gesendetes optisches Datensignal mit einem geringen Versatz auszusenden, um gerade die Laufzeit des gesendeten optischen Datensignals zu berücksichtigen. Nach dem Strahlteiler 54, mit dem das gesendete Datensignal in den Strahlengang des empfangenen Datensignals integriert wird, wird sodann das zu sendende optische Datensignal über den deformierbaren Spiegel 28 und den kippbaren Spiegel 26 mittels des Teleskops als Eingangsoptik 22 an den Empfänger ausgesendet.

Zur Kalibrierung des Aufbaus 20 wird ein Retroreflektor 56 in den Strahlengang eingekoppelt. Der Retroreflektor 56 reflektiert dabei einkommendes Licht in dieselbe Richtung zurück. Mit der Empfangsfaser 34 ist über einen Zirkulator 58 eine Empfangskalibrationsquelle 60, welche beispielsweise ausgebildet als Laser, verbunden. Licht der Empfangskalibrationsquelle wird mittels der Empfangsfaser 34 ausgesendet, dann durch die Empfangs-Kollimationsoptik 36 kollimiert und über den Strahlteiler 30 auf den Retroreflektor gelenkt. Vom Retroreflektor wird das Licht der Empfangskalibrationsquelle 60 zurückreflektiert und gelangt über die Empfangs-Kollimationsoptik 36 wieder auf die Endfacette der Empfangsfaser 34. Ist der Abstand zwischen der Empfangs-Kollimationsoptik 36 und der Endfacette der Empfangsfaser 34 nicht optimal, so wird das von der Empfangsfaser 34 ausgehende Licht der Empfangskalibrationsquelle nicht vollständig kollimiert und weist eine gewisse Divergenz oder Konvergenz auf. Dies wird durch den Retroreflektor 56 nicht geändert, so dass das vom Retroreflektor 56 zurückreflektierte Licht der Empfangskalibrationsquelle 60 weiterhin eine gewisse Divergenz oder Konvergenz aufweist. Dieses leicht divergierende oder konvergierende Licht gelangt über den Strahlteiler 30 wiederum auf die Empfangs-Kollimationsoptik 36. Da es sich hierbei jedoch nicht um optimal und vollständig kollimiertes Licht handelt, liegt der Fokuspunkt, der durch die Kollimationsoptik 36 erzeugt wird, vor oder hinter der Endfacette der Empfangsfaser 34 in z-Richtung, angezeigt durch den Pfeil 62. Da der Fokuspunkt, der durch die Kollimationsoptik 36 erzeugt wird, nicht unmittelbar auf der Endfacette der Empfangsfaser 34 liegt, wird nur ein verringerter Anteil des Lichtes der Empfangskalibrationsquelle zurück in die Empfangsfaser 34 eingekoppelt und sodann vom Detektor 32 detektiert. Für die Justage wird nun der Abstand zwischen der Endfacette der Empfangsfaser 34 und der Kollimationsoptik 36 angepasst, so dass die durch den Detektor 32 detektierte Leistung maximal wird.

Ein Teil des vom Retroreflektor 56 zurückreflektierte Licht der Empfangskalibrationsquelle 60 tritt durch den Strahlteiler 30 hindurch und wird auch mittels eines weiteren Strahlteilers 64 und einer entsprechenden Fokuslinse 66 auf ein Positionssensor 69 fokussiert. Der Positionssensor 69 weist dabei eine geringere Auflösung auf als der Vier-Quadranten-Sensor 38. Gleichzeitig kann jedoch die Fläche des Positionssensors 69 größer ausgebildet sein, so dass während des Betriebs ein einfaches Auffinden des Fokuspunktes des Eingangssignals auf dem Positionssensor 69 möglich ist. Sodann wird zur Justage der Positionsoffset des Positionssensors 69, der durch die Fehlpositionierung des Fokuspunktes 70 verursacht wird gespeichert. Diese Positionsinformation wird während dem Betrieb für eine Grobausrichtung verwendet. Sodann kann eine Feinjustage mittels dem Vier-Quadranten-Sensor 38 erfolgen, welcher eine deutlich größere Auflösung aufweist. Somit kann mittels des Detektors 32 und dem Positionssensor 69 bzw. dem Vier-Quadranten-Sensor 38 zuverlässig eine optimale Justage der Einkopplung in die Empfangsfaser 34 erreicht werden.

Ebenso ist eine Sendekalibrationsquelle 72 vorgesehen, welche im vorliegenden Beispiel als separate Lichtquelle ausgebildet ist. Das Licht der Sendekalibrationsquelle 72 wird über einen Hochleistungsschalter 74 in die Sendefaser 48 eingekoppelt. Das Licht der Sendekalibrationsquelle gelangt über die entsprechende Sende-Kollimationsoptik 50 und den Point-Ahead Spiegel 52, den Strahlteiler 54 und den deformierbaren Spiegel 28 zum Retroreflektor 56 und wird ebenso zurückreflektiert. Das durch den Retroreflektor 56 zurückreflektierte Licht der Sendekalibrationsquelle 72 wird sodann über den Strahlteiler 30 über die Empfangsfaser 34 auf den Detektor 32 geleitet. Sodann erfolgt eine Anpassung des Abstands der Endfacette der Sendefaser 48 zu der entsprechenden Kollimationsoptik 50 entlang der optischen Achse 76 anhand der durch den Detektor 32 ermittelten Leistung, so dass diese maximal wird.

Das vom Retroreflektor 56 zurückreflektierte Licht der Sendekalibrationsquelle 72 wird in gleicher Weise, wie vorstehend für das im Licht der Empfangskalibrationsquelle beschrieben, auf den Positionssensor 69 für eine Grobjustage und sodann auf den Vier-Quadranten-Sensor 38 für eine Feinjustage geleitet, wobei unter Verwendung des Point-Ahead Spiegels der Winkelfehler zwischen dem Strahlengang des empfangenen optischen Datensignals und dem gesendeten optischen Datensignal ausgeglichen wird.

Anschließend wird der Retroreflektor aus dem Strahlengang herausgeklappt. Der nun vollständig justierte Aufbau 20 kann nun im Betrieb optische Datensignale senden und empfangen.

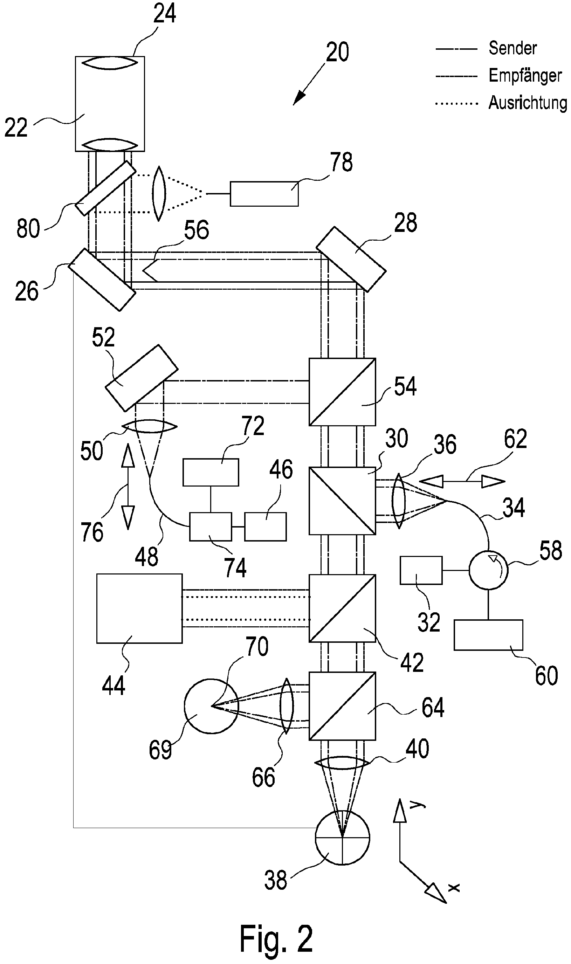

Darüber hinaus ist in dem Ausführungsbeispiel der Fig. 2 eine Phasenkalibrationsquelle 78 vorgesehen, wobei das Licht der Phasenkalibrationsquelle 78 mittels eines klappbaren Spiegels 80 in den Strahlengang eingekoppelt wird. Das Licht der Phasenkalibrationsquelle wird durch den Strahlteiler 42 auf den Wellenfront-Sensor 44 gelenkt. Hierdurch ist es möglich die Influenz Matrix des vorliegenden Aufbau 20 zu bestimmen, da das Licht der Phasenkalibrationsquelle 78 keine Phasenstörungen aufweist und die durch den Wellenfront-Sensor 44 bestimmten Störungen der Wellenfront ausschließlich durch Störungen des Aufbaus selbst herrühren.

Das Verfahren zur Justage des Aufbaus 20 beinhaltet somit die folgenden Schritte:
1. Einklappen des Retroreflektors 56,
2. Anpassen des Abstands zwischen Endfacette der Empfangsfaser 34 und der Empfangs-Kollimationsoptik 36 in z-Richtung 62 bis die Leistung, welche vom Detektor 32 detektiert wird, maximal ist und
3. Anpassen der lateralen Position des Vier-Quadranten-Sensors 38.
4. Anpassen des Abstandes zwischen Endfacette der Sendefaser 48 und der entsprechenden Kollimationsoptik 50 in Abhängigkeit der vom Detektor 32 ermittelten Leistung. Hierbei kann das Licht der Empfangskollimationsquelle ausgeschaltet sein um eine gegenseitige Beeinflussung der Justageschritte zu vermeiden.
5. Anpassen des Sendewinkels des kollimierten Sendepfads ümittels dem Point-Ahead Spiegel 52anhand des Positionssensors 69 und dem Vier-Quadranten-Sensor 38.
6. Herausklappen des Retroreflektors 56.
7. Bestimmung der Influenz Matrix mittels der Phasenkalibrationsquelle 78 und dem Wellenfront-Sensor 44.

## Patentansprüche

1. Aufbau zum Empfangen eines optischen Datensignals, mit
einer Eingangsoptik (22) zum Empfangen des optischen Datensignals,
einer optischen Empfangsfaser (34) mit einer Endfacette, wobei mittels einer Kollimationsoptik (36) das optische Datensignal in die optische Empfangsfaser (34) einkoppelbar ist, wobei ein Detektor (32) mit der optischen Empfangsfaser (34) verbunden ist zur Detektion des optischen Datensignals,
einer Empfangskalibrationsquelle (60), wobei die Empfangskalibrationsquelle (60) mittels eines Zirkulators (38) mit der optischen Empfangsfaser (34) verbunden ist, und
einem in den Strahlengang klappbaren Retroreflektor (56), welcher zur Justage in den Strahlengang klappbar ist, so dass das Licht der Empfangskalibrationsquelle (60) zurückreflektiert wird und mittels der Kollimationsoptik (36) auf die Endfacette der Empfangsfaser (34) fokussiert wird,
wobei der Abstand zwischen Kollimationsoptik (36) und Endfacette der Empfangsfaser (34) veränderbar ist,
wobei der Abstand anpassbar ist in Abhängigkeit der vom Detektor (32) erfassten Leistung des Lichts der Empfangskalibrationsquelle (60), so dass ein kollimierter Strahl erhalten wird, um im Betrieb die maximal mögliche Einkoppeleffizienz zu erhalten.

2. Aufbau nach Anspruch 1 **gekennzeichnet durch** einen Vier-Quadranten-Sensor (38), wobei wenn der Retroreflektor (56) in der Strahlengang geklappt ist, Licht der Empfangskalibrationsquelle (60) mittels einer Optik (40) auf den Vier-Quadranten-Sensor (38) fokussiert wird, wobei der Vier-Quadrantensensor (38) in einer Ebene senkrecht zur optischen Achse bewegbar ist, wobei der Vier-Quadrantensensor (38) bewegbar ist in Abhängigkeit zur Messung des Vier-Quadranten-Sensors (38), so dass der relative laterale Offset zwischen dem Vierquadrantensensor (38) und der Endfacette der Empfangsfaser (34) kompensierbar ist.

3. Aufbau nach Anspruch 1 oder 2 **gekennzeichnet durch** einen Positionssensor (68), wobei wenn der Retroreflektor (56) in den Strahlengang geklappt ist, Licht der Empfangskalibrationsquelle (60) mittels einer Optik (66) auf den Positionssensor (68) fokussiert wird zur Ermittlung der lateralen Position der Endfacette der Empfangsfaser (34) relativ zum Positionssensor zur Grobausrichtung.

4. Aufbau nach einem der Ansprüche 1 bis 3 **gekennzeichnet durch** einen Sendelaser (46) zum bidirektionalen Senden und Empfangen eines optischen Datensignals, wobei der Sendelaser (46) insbesondere mit einer optischen Sendefaser (48) verbunden ist.

5. Aufbau nach Anspruch 4 **gekennzeichnet durch** eine fasergebundene Sendekalibrationsquelle (72) zur Kalibrierung des Überlapps zwischen den optischen Pfaden des empfangenen optischen Datensignals und dem gesendeten optischen Datensignal, wobei das Licht der Sendekalibrationsquelle (72) am Retroreflektor (56) reflektiert wird und von dem Detektor (32) detektiert wird, wobei die Sendekalibrationsquelle (72) mit der Sendefaser (28) verbunden ist, und wobei der Abstand zwischen einer Endfacette der Sendefaser (48) und einer Sende-Kollimationsoptik (50) zum Auskoppeln des optischen Datensignals des Sendelasers (46) aus der Sendefaser (48) veränderbar ist, wobei der Abstand angepasst wird in Abhängigkeit von der vom Detektor (32) erfassten Leistung, so dass ein beugungsbegrenzter kollimierter Sendestrahl erhalten wird.

6. Aufbau nach Anspruch 4 oder 5 **gekennzeichnet durch** einen Vorhaltespiegel im Strahlengang des Sendelasers, wobei der Vorhalt des Vorhaltespiegels anpassbar ist in Abhängigkeit der Messung des Vier-Quadranten-Sensors zur Erzeugung eines Überlapps und Vermeidung eines Winkelversatzes zwischen den optischen Pfaden des empfangenen optischen Datensignal und dem gesendeten optischen Datensignal.

7. Aufbau nach einem der Ansprüche 1 bis 6 **gekennzeichnet durch** eine adaptive Optik (28) im Strahlengang zur Adaption der Wellenfrontstörungen bei der Übertragung.

8. Aufbau nach einem der Ansprüche 1 bis 7 **gekennzeichnet durch** einen Wellenfront-Sensor (44), wobei der Wellenfront-Sensor (44) insbesondere verbunden ist mit der adaptiven Optik (28), so dass die vom Wellenfront-Sensor (44) detektierte Wellenfront-Störung durch die adaptive Optik (28) ausgeglichen wird.

9. Aufbau nach Anspruch 8 **gekennzeichnet durch** eine Phasenkalibrationsquelle (78), welche insbesondere durch einen klappbaren Spiegel (80) in den Strahlengang eingekoppelt wird, so dass die Phasenstörung des Aufbaus mittels dem Wellenfront-Sensor (44) ermittelbar ist und eine Influenzmatrix im System gemessen werden kann.

10. Datenübertragungssystem zur Übertragung eines optischen Datensignals von einem Sender zu einem Empfänger, wobei Sender (12) und/oder Empfänger (14) ausgebildet sind gemäß dem Aufbau der Ansprüche 1 bis 9.

11. Datenübertragungssystem nach Anspruch 10, wobei es sich um einen Satelliten-Uplink handelt und es sich bei dem Empfänger (14) um einen Satelliten insbesondere in einer geostationären Umlaufbahn handelt und bei dem Sender (12) um einen erdnahen oder bodenstationären Sender.

12. Verfahren zur Justage eines Aufbaus zum Empfangen und/oder Senden eines optischen Datensignals mit einem Aufbau nach einem der Ansprüche 1 bis 9, bei welchem
a) Der Retroreflektor (56) in den Strahlengang geklappt wird;
b) Licht der Empfangskalibrationsquelle (60) ausgesendet wird und vom Retroreflektor (56) auf den Detektor (32) zurückreflektiert wird;
c) Der Abstand der Endfacette der Empfangsfaser (34) zur Kollimationsoptik (36) angepasst wird, bis die vom Detektor (32) ermittelte Leistung des empfangenen Lichts der Empfangskalibrationsquelle (60) maximal wird;
d) Zurückklappen des Retroreflektors (56) aus dem Strahlengang und empfangen eines optischen Datensignals mit dem Detektor (32).

13. Verfahren nach Anspruch 12, bei welchem vor Schritt d) die laterale Position eines Vier-Quadranten-Sensors an die Position des vom Retroreflektor (56) zurückreflektierte Licht angepasst wird.

14. Verfahren nach Anspruch 12 oder 13, bei welchem Licht von der Sendekalibrationsquelle (72) ausgesendet wird und vom Retroreflektor (56) auf den Detektor (32) zurückreflektiert wird, wobei der Abstand zwischen der Endfacette der Sendefaser (48) und der Kollimationsoptik (50) angepasst wird in Abhängigkeit von der von dem Detektor (32) ermittelten Leistung des empfangenen Lichts der Sendekalibrationsquelle (72), so dass ein beugungsbegrenzter kollimierter Sendestrahl erhalten wird.

15. Verfahren nach Anspruch 14, bei welchem mittels einem Vorhaltespiegel der Winkelversatz zwischen den optischen Pfaden des empfangenen optischen Datensignals und dem gesendeten optischen Datensignals eliminiert wird durch Überlapp der vom Retroreflektor (56) zurückreflektierten Signale auf einem Vier-Quadranten-Sensor.

## Claims

1. A structure for receiving an optical data signal, comprising
an input optics (22) for receiving the optical data signal,
an optical receiving fiber (34) comprising an end facet, wherein the optical data signal is configured to be coupled into the optical receiving fiber (34) by means of a collimation optics (36), wherein a detector (32) is connected to the optical receiving fiber (34) for detecting the optical data signal,
a receiving calibration source (60), wherein the receiving calibration source (60) is connected, in particular in a fiber-based manner, to the optical receiving fiber (34) by means of a circulator (38), and
a retroreflector (56) configured to be folded into the beam path, the former being folded into the beam path for adjusting purposes such that the light of the receiving calibration source (60) is reflected back and focused onto the end facet of the receiving fiber (34) by means of the collimation optics (34),
wherein the distance between the collimation optics (36) and the end facet of the receiving fiber (34) is variable,
wherein the distance is adaptable depending on the power of the light of the receiving calibration source (60) detected by the detector (32) such that a collimated beam is obtained for obtaining the maximum possible in-coupling efficiency during operation.

2. The structure according to claim 1, **characterized in that** a four-quadrant-sensor (38) is provided, wherein during adjustment, with the retroreflector (56) folded into the beam path, light of the receiving calibration source (60) is focused onto the four-quadrant sensor (38) by means of an optics (40), wherein the four-quadrant sensor (38) is movable in a plane perpendicular to the optical axis, wherein the four-quadrant sensor (38) is movable depending on the measurement of the four-quadrant sensor (38), such that the relative lateral offset between the four-quadrant sensor (38) and the end facet of the receiving fiber (34) can be compensated for.

3. The structure according to claim 1 or 2, **characterized in that** a position sensor (68) is provided, wherein during adjustment, with the retroreflector (56) folded into the beam path, light of the receiving calibration source (60) is focused onto the position sensor (68) by means of an optics (66) for determining the lateral position of the end facet of the receiving fiber (34) relative to the position sensor for rough pointing.

4. The structure according to any one of claims 1 to 3, **characterized in that** a transmitting laser (46) is provided for bidirectional transmitting and receiving of an optical data signal, wherein the transmitting laser (46) is in particular connected to an optical transmitting fiber (48).

5. The structure according to claim 4, **characterized in that** a fiber-based transmitting calibration source (72) is provided for calibrating the overlap between the optical paths of the received optical data signal and the transmitted optical data signal, wherein the light of the transmitting calibration source (72) is reflected at the retroreflector (56) and detected by the detector (32), wherein the transmitting calibration source (72) is connected to the transmitting fiber (28), and wherein the distance between an end facet of the transmitting fiber (48) and a transmitting collimation optics (50) for coupling the optical data signal of the transmitting laser (46) out of the transmitting laser (48) is variable, wherein the distance is adapted depending on the power detected by the detector (32) such that a refraction-limited collimated transmitting beam is obtained.

6. The structure according to claim 4 or 5, **characterized in that** in the beam path of the transmitting laser a point-ahead mirror is provided, wherein the point-ahead value of the point-ahead mirror is adaptable depending on the measurement of the four-quadrant sensor for generating an overlap and avoiding an angle offset between the optical paths of the received optical data signal and the transmitted optical data signal.

7. The structure according to any one of claims 1 to 6, **characterized in that** an adaptive optics (28) is provided in the beam path for adaption of the wave front interferences during the transmission.

8. The structure according to any one of claims 1 to 7, **characterized in that** a wave front sensor (44) is provided, wherein the wave front sensor (44) is in particular connected to the adaptive optics (28) such that the wave front interference detected by the wave front sensor (44) is compensated for by the adaptive optics (28).

9. The structure according to claim 8, **characterized in that** a phase calibration source (78) is provided which is in particular coupled into the beam path by a foldable mirror (80) such that the phase interference of the structure is detectable by means of the wave front sensor (44) and an influence matrix in the system can be measured.

10. A data transfer system for transferring an optical data signal from a transmitter to a receiver, wherein the transmitter (12) and/or the receiver (14) are configured in accordance with the structure according to claims 1 to 9.

11. The data transfer system according to claim 10, wherein it is a satellite uplink and the receiver (14) is a satellite in particular in a geostationary orbit and the transmitter (12) is a transmitter located near the earth or stationarily on the ground.

12. A method for adjusting a structure for receiving and/or transmitting an optical data signal in particular with a structure according to any one of claims 1 to 9, wherein
a) the retroreflector (56) is folded into the beam path;
b) light of the receiving calibration source (60) is transmitted and reflected back to the detector (32) by the retroreflector (56);
c) the distance of the end facet of the receiving fiber (34) to the collimation optics (36) is adapted until the power of the received light of the receiving calibration source (60) detected by the detector (32) is at its maximum, and
d) folding back the retroreflector (56) out of the beam path and receiving an optical data signal with the detector (32).

13. The method according to claim 12, wherein before step d), the lateral position of a four-quadrant sensor is adapted to the position of the light reflected back by the retroreflector (56).

14. The method according to claim 12 or 13, wherein light is transmitted by the transmitting calibration source (72) and reflected back to the detector (32) by the retroreflector (56), wherein the distance between the end facet of the transmitting fiber (48) and the collimation optics (50) is adapted depending on the power of the received light of the transmitting calibration source (72) detected by the detector (32) such that a refraction-limited transmitting beam is obtained.

15. The method according to claim 14, wherein, by means of a point-ahead mirror, the angle offset between the optical paths of the received optical data signal and the transmitted optical data signal is eliminated due to an overlap of the signals reflected back by the retroreflector (56) on a four-quadrant sensor.

## Revendications

1. Structure de réception d'un signal de données optique, comprenant
une optique d'entrée (22) pour la réception du signal de données optique,
une fibre optique de réception (34) comprenant une facette d'extrémité, le signal de données optique pouvant être couplé dans la fibre optique de réception (34) au moyen d'une optique de collimation (36), un détecteur (32) étant connecté à la fibre optique de réception (34) pour la détection du signal de données optique,
une source de calibration de réception (60), la source de calibration de réception (60) étant connectée à la fibre optique de réception (34) au moyen d'un circulateur (38), et
un rétroréflecteur (56) rabattable dans le trajet optique, lequel peut être rabattu dans le trajet optique à des fins de réglage, de telle façon que la lumière de la source de calibration de réception (60) est rétroréfléchie et focalisée au moyen de l'optique de collimation (36) sur la facette d'extrémité de la fibre de réception (34),
la distance entre l'optique de collimation (36) et la facette d'extrémité de la fibre optique de réception (34) étant modifiable,
la distance pouvant être adaptée en fonction de la puissance de la lumière de la source de calibration de réception (60) détectée par le détecteur (32), de façon à obtenir un faisceau collimaté, afin d'obtenir l'efficacité de couplage maximale possible durant le fonctionnement.

2. Structure selon la revendication 1, **caractérisée par** un capteur à quatre quadrants (38), lorsque le rétroréflecteur (56) est rabattu dans le trajet optique, une lumière de la source de calibration de réception (60) étant focalisée sur le capteur à quatre quadrants (38) au moyen d'une optique (40), le capteur à quatre quadrants (38) étant mobile dans un plan perpendiculaire à l'axe optique, le capteur à quatre quadrants (38) étant mobile en fonction de la mesure du capteur à quatre quadrants (38), de sorte que le décalage latéral relatif entre le capteur à quatre quadrants (38) et la facette d'extrémité de la fibre de réception (34) puisse être compensé.

3. Structure selon la revendication 1 ou 2, **caractérisée par** un capteur de position (68), la lumière de la source de calibration de réception (60) étant, lorsque le rétroréflecteur (56) est rabattu dans le trajet optique, focalisée sur le capteur de position (68) au moyen d'une optique (66), pour la détermination de la position latérale de la facette d'extrémité de la fibre de réception (34) par rapport au capteur de position, pour un alignement grossier.

4. Structure selon l'une quelconque des revendications 1 à 3, **caractérisée par** un émetteur laser (46) pour l'émission et la réception bidirectionnelles d'un signal de données optique, l'émetteur laser (46) étant en particulier connecté à une fibre optique d'émission (48).

5. Structure selon la revendication 4, **caractérisée par** une source de calibration d'émission (72) liée à une fibre pour la calibration du chevauchement entre le chemin optique du signal de données optique reçu et du signal de données optique émis, la lumière de la source de calibration d'émission (72) étant réfléchie sur le rétroréflecteur (56) et détectée par le détecteur (32), la source de calibration d'émission (72) étant connectée à la fibre d'émission (28) et la distance entre une facette d'extrémité de la fibre d'émission (48) et une optique de collimation d'émission (50) pouvant être modifiée pour le découplage du signal de données optique de l'émetteur laser (46) de la fibre d'émission (48), la distance pouvant être ajustée en fonction de la puissance détectée par le détecteur (32), de façon à obtenir un faisceau d'émission collimaté à diffraction limitée.

6. Structure selon la revendication 4 ou 5, **caractérisée par** un miroir de pointage dans le trajet optique de l'émetteur laser, le pointage du miroir de pointage pouvant être adapté en fonction de la mesure du capteur à quatre quadrants pour la génération d'un chevauchement et la prévention d'un décalage angulaire entre le chemin optique du signal de données optique reçu et le signal de données optique émis.

7. Structure selon l'une quelconque des revendications 1 à 6, **caractérisée par** une optique adaptative (28) dans le trajet optique pour l'adaptation des perturbations du front d'onde lors de la transmission.

8. Structure selon l'une quelconque des revendications 1 à 7, **caractérisée par** un capteur de front d'onde (44), le capteur de front d'onde (44) étant en particulier connecté à l'optique adaptative (28), de sorte que la perturbation du front d'onde détectée par le capteur de front d'onde (44) étant compensée par l'optique adaptative (28).

9. Structure selon la revendication 8, **caractérisée par** une source de calibration de phases (78), laquelle est en particulier couplée dans le trajet optique par un miroir rabattable (80), de sorte que la perturbation de phase de la structure puisse être déterminée au moyen du capteur de front d'onde (44) et qu'une matrice d'influence puisse être mesurée dans le système.

10. Système de transmission de données pour la transmission d'un signal de données optique d'un émetteur vers un récepteur, l'émetteur (12) et/ou le récepteur (14) étant conçus selon la structure des revendications 1 à 9.

11. Système de transmission de données selon la revendication 10, dans lequel il s'agit d'une liaison montante de satellite et il s'agit pour le récepteur (14) d'un satellite, en particulier sur une orbite géostationnaire, et pour l'émetteur (12), d'un émetteur proche de la Terre ou stationnaire par rapport au sol.

12. Procédé pour l'adaptation d'une structure de réception et/ou d'émission d'un signal de données optique comprenant une structure selon l'une quelconque des revendications 1 à 9, dans lequel
a) Le rétroréflecteur (56) est rabattu dans le trajet optique ;
b) Une lumière de la source de calibration de réception (60) est émise et rétroréfléchie par le rétroréflecteur (56) sur le détecteur (32) ;
c) La distance de la facette d'extrémité de la fibre de réception (34) à l'optique de collimation (36) est adaptée jusqu'à ce que la puissance de la lumière de la source de calibration de réception (60) reçue détectée par le détecteur (32) soit maximale ;
d) Relevage du rétroréflecteur (56) hors du trajet optique et réception d'un signal de données optique avec le détecteur (32).

13. Procédé selon la revendication 12, dans lequel, avant l'étape d), la position latérale d'un capteur à quatre quadrants est adaptée à la position de la lumière rétroréfléchie par le rétroréflecteur (56).

14. Procédé selon la revendication 12 ou 13, dans lequel une lumière est émise par la source de calibration d'émission (72) et rétroréfléchie par le rétroréflecteur (56) sur le détecteur (32), la distance entre la facette d'extrémité de la fibre d'émission (48) et l'optique de collimation (50) est adaptée en fonction de la puissance de la lumière de la source de calibration d'émission (72) reçue détectée par le détecteur (32), de façon à obtenir un faisceau d'émission collimaté à diffraction limitée.

15. Procédé selon la revendication 14, dans lequel le décalage angulaire entre le chemin optique du signal de données optique reçu et du signal de données optique émis est éliminé, au moyen d'un miroir de pointage, par un chevauchement des signaux rétroréfléchis par le rétroréflecteur (56) sur le capteur à quatre quadrants.
